(19) Europäisches Patentamt
European Patent Office
Office européen des brevets

(11) **EP 2 427 364 B1**

(12) **FASCICULE DE BREVET EUROPEEN**

(45) Date de publication et mention
de la délivrance du brevet:
**15.07.2020 Bulletin 2020/29**

(51) Int Cl.:
**B62D 57/032** (2006.01)

(21) Numéro de dépôt: **10721393.6**

(22) Date de dépôt: **05.05.2010**

(86) Numéro de dépôt international:
**PCT/EP2010/056125**

(87) Numéro de publication internationale:
**WO 2010/128088 (11.11.2010 Gazette 2010/45)**

(54) **PROCEDE DE COMMANDE D'UN ROBOT HUMANOIDE**

VERFAHREN ZUR STEUERUNG EINES HUMANOIDEN ROBOTERS

METHOD FOR CONTROLLING A HUMANOID ROBOT

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **05.05.2009 FR 0952997**

(43) Date de publication de la demande:
**14.03.2012 Bulletin 2012/11**

(73) Titulaires:
• **BIA**
**78700 Conflans Sainte Honorine (FR)**
• **Université de Versailles
Saint-Quentin-en-Yvelines
78035 Versailles Cédex (FR)**

(72) Inventeurs:
• **ALFAYAD, Samer
F-92340 Bourg La Reine (FR)**
• **BRUNEAU, Olivier
F-91300 Massy (FR)**
• **DOUBLIEZ, Paul-François
F-75019 Paris (FR)**
• **BEN OUEZDOU, Fathi
F-92340 Bourg La Reine (FR)**

(74) Mandataire: **Collet, Alain et al
Marks & Clerk France
Conseils en Propriété Industrielle
Immeuble Visium
22, Avenue Aristide Briand
94117 Arcueil Cedex (FR)**

(56) Documents cités:
• **S. Kajita; T. Yamaura; A. Kobayashi: "Dynamic
Walking Control of a Biped Robot along a
Potential Energy Conserving Orbit" IEEE
Transactions on Robotics and Automation vol. 8,
4 août 1992 (1992-08-04), pages 431-438,
XP002570354 Extrait de l'Internet:
URL:http://ieeexplore.ieee.org/stamp/stamp .jsp
?arnumber=00149940 [extrait le 2010-02-24]**
• **ASANO F ET AL: "A Novel Gait Generation for
Biped Walking Robots Based on Mechanical
Energy Constraint" IEEE TRANSACTIONS ON
ROBOTICS AND AUTOMATION, IEEE INC, NEW
YORK, US, vol. 20, no. 3, 1 juin 2004 (2004-06-01),
pages 565-573, XP011113646 ISSN: 1042-296X**
• **LUO XIANG ET AL: "Sensor-Based Biped
Walking: A Sagittal Plane Research"
MECHATRONICS AND MACHINE VISION IN
PRACTICE, 2008. M2VIP 2008. 15TH
INTERNATIONAL CONFERENCE ON, IEEE,
PISCATAWAY, NJ, USA, 2 décembre 2008
(2008-12-02), pages 555-560, XP031406849 ISBN:
978-1-4244-3779-5**

**Description**

L'invention concerne un procédé de commande d'un robot humanoïde comportant deux jambes terminées chacune par un pied pouvant prendre appui sur un sol et permettant son déplacement. L'invention trouve une utilité particulière dans la commande de la marche d'un robot humanoïde se rapprochant au mieux de celle de l'homme.

La commande haut niveau d'un robot humanoïde, reste toujours un problème non résolu définitivement. L'une des problématiques des robots marcheurs humanoïdes actuels est la difficulté à les contrôler pour assurer une vitesse moyenne désirée dans un régime dynamique du fait de l'inertie importante de ces robots. Au mieux, on ne peut constater cette vitesse moyenne d'avancée qu'une fois l'enjambée achevée. A l'heure actuelle, aucune stratégie de contrôle applicable en temps réel ne permet de déterminer le comportement dynamique du robot durant l'enjambée suivante et d'en déduire un paramètre de contrôle fondamental conditionnant le comportement énergétique du système pour atteindre une vitesse moyenne désirée pour cette enjambée suivante. La question principale à laquelle ce type de commande essaye de répondre est la suivante : pour réaliser une marche, quelle relation faut-il établir entre les termes suivants : la vitesse du robot représentée par la vitesse de son centre de gravité, la longueur de pas actuelle et celle à effectuer à chaque instant, les forces produites par les jambes, et les effets dynamiques produits par la partie supérieure du corps du robot.

Plus on souhaite se rapprocher de la démarche humaine, plus cette question devient complexe et la réponse correspondante inconnue. Ainsi, tous les travaux proposés dans ce domaine commencent par s'appuyer sur un modèle simple de la marche humaine, ensuite les méthodes sont étendues afin de générer une marche plus naturelle. En se basant sur des études biomécaniques, on constate que le mouvement du centre de gravité de l'être humain durant la marche, ressemble au mouvement d'un pendule inverse dans l'espace. Ceci a permis de proposer le modèle le plus simple présenté par un pendule inverse dans le plan sagittal.

Plusieurs méthodes ont été proposées, pour résoudre ce problème, bien connu dans la littérature anglo-saxonne par « Pattern Generator » que l'on peut traduire par générateur d'allure. Dans ces méthodes on cherche par exemple à déterminer la trajectoire du centre de gravité et la longueur de pas appropriée durant la marche du robot.

Une première méthode intuitive est basée sur l'analyse de variations angulaires de chaque articulation du robot humanoïde.

Cette méthode est bien connue dans la littérature anglo-saxonne sous le nom de « Joint Space ». Dans cette méthode on cherche à trouver directement, la variation angulaire des articulations avec le temps. Le cycle de la marche est subdivisé en plusieurs phases. Les valeurs initiales et finales d'angles des articulations pour chaque phase sont par la suite déterminées. Enfin, une interpolation temporelle, entre la valeur initiale et la valeur finale permet de définir la variation angulaire des articulations au cours de temps. Cette méthode ne prend pas en compte l'effet dynamique du robot. Elle est utile pour faire marcher des robots de petite taille, typiquement inférieurs à 0,5 m, à faible vitesse. Elle ne donne pas de bons résultats pour des robots de taille humaine adulte destinés à avancer à la vitesse de marche humaine, par exemple de l'ordre de 1 à 2 m/s.

Une deuxième méthode dite du pendule inverse approche la dynamique du robot par celle d'un pendule inverse ou l'ensemble de la masse du robot est supposée être concentrée au niveau du centre de gravité du robot. La masse du robot se balance autour d'un point d'appui posé au sol. Cette méthode permet d'obtenir une marche plus naturelle que la méthode précédente. Un autre avantage est le temps de calcul faible, grâce au modèle simple du pendule inverse.

Dans une troisième méthode dite des multi-pendules, la dynamique de robot est approchée à l'aide de plusieurs pendules afin de s'approcher au mieux de la dynamique du corps complet. Différents sous ensembles rigides mobiles entre eux au niveau des articulations sont modélisés chacun par des pendules inverses. Ce modèle est plus proche de la dynamique de robot, mais nécessite des temps de calcul très grands, ce qui rend l'utilisation de ce modèle en temps réel difficile.

Dans une quatrième méthode, décrite dans l'article "Dynamic Walking Control of a Biped Robot Along a Potential Energy Conserving Orbit" publié le 4 août 1992 par l'IEEE, l'énergie potentielle est maintenue constante.

Toutes les méthodes présentées précédemment, sont basées sur le modèle dynamique, soit simplifié, soit un peu plus affiné. Ceci entraine que l'application de l'une de ces méthodes nécessite la résolution d'un système d'équations différentielles. Ainsi, plus on choisit un modèle fin, plus le temps nécessaire pour résoudre ce système devient grand. Ce qui limite grandement leur utilisation en temps réel, et bien sûr empêche le contrôle prédictif.

Par ailleurs, toutes ces méthodes ne gèrent pas l'énergie globale du robot durant la marche. Ainsi aucune garantie n'est assurée pour que le robot utilise d'une manière optimale son énergie. Ce dernier aspect conditionne fortement son autonomie.

L'invention vise à pallier tout ou partie des problèmes cités plus haut en proposant un procédé de commande d'un robot humanoïde comportant deux jambes terminées chacune par un pied pouvant prendre appui sur un sol et permettant son déplacement, caractérisé en ce qu'il consiste à partir d'une équation de conservation de l'énergie totale moyenne durant une enjambée courante à déterminer des paramètres nécessaires à exécuter l'enjambée suivante.

On rappelle que l'énergie totale moyenne est égale à la somme de l'énergie potentielle moyenne, de l'énergie cinétique moyenne et de l'énergie moyenne apportée au robot. L'énergie potentielle ne dépend que de la masse du robot et de paramètres géométriques tels que par exemple la hauteur de son centre de gravité. L'énergie cinétique ne dépend que de la masse du robot et du carré de sa vitesse de déplacement. L'énergie apportée peut être générée par un moteur embarquée, sous forme d'une force ou d'un couple, ou générée par toute autre action extérieure sur le robot.

Les paramètres nécessaires pour exécuter une enjambée sont choisis parmi les paramètres de l'équation de conservation de l'énergie totale moyenne.

La méthode proposée, est basée sur des critères énergétiques par exemple appliqués à un modèle de pendule inverse. Elle permet d'établir, pour une enjambée, une relation entre des variables géométriques, une force propulsive à exercer par une jambe sur le sol et une vitesse moyenne désirée.

Pour exécuter l'enjambée suivante, on peut imposer deux paramètres dans la relation précédemment définie afin de déterminer le troisième paramètre.

Les variables géométriques de l'enjambée suivante comprennent par exemple une distance séparant une zone d'appui sur le sol d'un pied du robot durant l'enjambée courante et une zone d'appui sur le sol d'un pied du robot durant l'enjambée suivante. Autrement dit, il s'agit de la longueur du pas de l'enjambée suivante.

Dans le plan sagittal, la longueur du pas peut comprendre une distance horizontale et une distance verticale afin de franchir un obstacle tel que par exemple la montée d'une marche d'escalier ou le déplacement du robot sur un sol en pente.

On peut bien entendu exprimer les variables géométriques, la force propulsive à exercer par une jambe sur le sol et la vitesse moyenne désirée dans un espace à trois dimensions, de manière à permettre au robot de changer de direction lors de son déplacement.

La relation est déterminée en fonction de données connues par exemple mesurées à l'enjambée précédente et à partir des équations de l'énergie moyenne durant une enjambée pour un système non conservatif. Les données connues peuvent également avoir été estimées ou calculées.

Le fait d'utiliser l'énergie moyenne permet d'éviter la mise en œuvre d'équations dynamiques temporelles conduisant à la résolution d'équations différentielles complexes.

L'énergie totale moyenne est exprimée en fonction de la configuration géométrique de robot, ce qui permet d'éviter d'utiliser toute variable temporelle.

Il est possible de tenir compte de tous les types d'énergies mécaniques apportées au robot y compris des perturbations comme par exemple le fait de pousser le robot ou encore des efforts dus au vent.

En l'absence de perturbations, c'est-à-dire en ne tenant compte que de la seule marche du robot sur le sol, dans l'équation de l'énergie totale, la somme de l'énergie cinétique du robot et de l'énergie potentielle du robot est considérée constante tant qu'un seul pied est en contact avec le sol.

Dans l'équation de conservation de l'énergie pour une enjambée, on distingue trois phases : une phase de simple support où seule la jambe arrière l'appui au sol, une phase de double support où la jambe avant vient en contact avec le sol, tout en conservant la jambe arrière en appui et une troisième phase où la jambe arrière a quitté le sol. Par convention, une enjambée débute par une phase de simple appui lorsque le centre de gravité du robot est à la verticale de son appui au sol. Seule la phase de double support constitue une phase motrice dans la marche. C'est la jambe arrière qui exerce une force sur le sol pour augmenter l'énergie totale du robot.

En distinguant un nombre fini de phases, il n'est pas nécessaire d'effectuer un calcul différentiel et la détermination des paramètres nécessaires à exécuter l'enjambée suivante ne se fait qu'une seule fois par enjambée. Du fait de la simplicité des calculs, Il est tout à fait possible de déterminer des paramètres pour plusieurs enjambées à venir.

L'invention sera mieux comprise et d'autres avantages apparaîtront à la lecture de la description détaillée d'un mode de réalisation donné à titre d'exemple, description illustrée par le dessin joint dans lequel :

la figure 1 représente un robot et sa modélisation sous forme de pendule inverse ;
la figure 2 représente l'enchaînement de deux pas sur un sol plan en utilisant le modèle de la figure 1 ;
la figure 3 représente un exemple de solution graphique permettant de déterminer la longueur d'un pas suivant ;
la figure 4 représente l'enchainement de deux pas avec franchissement d'un obstacle en utilisant le modèle de la figure 1.

Le tableau 1 définit les variables utilisées dans la suite de la description et l'annexe 1 décrit un exemple de stratégie de contrôle d'un robot humanoïde sur sol plan et avec obstacle.

Par souci de clarté, les mêmes éléments porteront les mêmes repères dans les différentes figures.

Pour expliquer l'invention de façon simple, on utilise un modèle de pendule inverse ou toute la masse du robot est concentrée en son centre de gravité. De plus, on étudie le mouvement de ce pendule simple dans le plan sagittal. Il est bien entendu possible de mettre en œuvre un modèle plus complexe, par exemple celui des multi pendules pour affiner la démarche du robot. On s'est néanmoins rendu compte que dans le modèle des multi pendules, il est possible de trouver une relation entre les déplacements angulaires des différents pendules qui ne sont pas indépendants les uns des autres.

Par ailleurs, la description qui suit est faite dans le plan sagittal. Autrement dit la modélisation est faite en deux dimensions et le robot avance uniquement dans son plan sagittal. Il est tout à fait possible d'étendre le modèle à tout déplacement en trois dimensions.

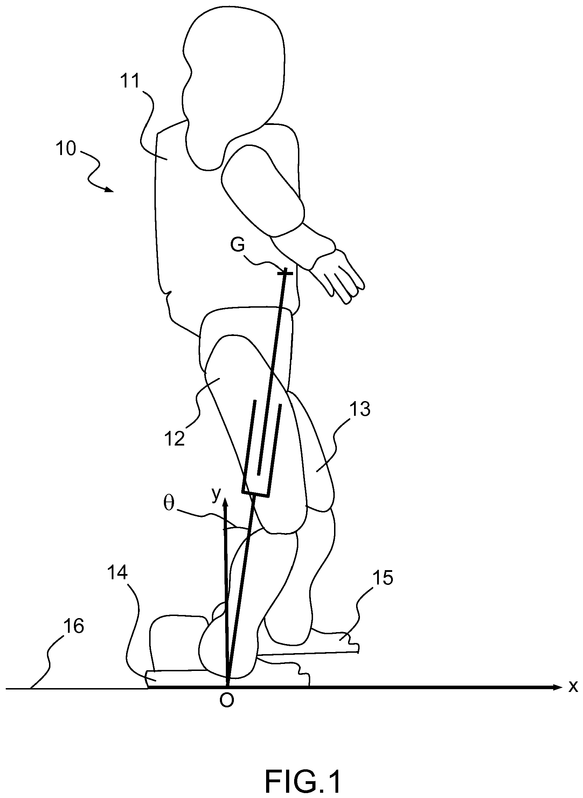

La figure 1 représente un robot humanoïde 10 comprenant essentiellement un corps 11 supporté par deux jambes 12 et 13. Chaque jambe étant terminée par un pied, respectivement 14 et 15, pouvant prendre appui sur un sol 16 plat. Les jambes 12 et 13 permettent le déplacement du robot 10. Sur la figure 1, seul le pied 14 est posé au sol. Le pied 15 est soulevé pour réaliser une enjambée permettant au robot 10 de marcher. Pour l'ensemble du robot 10, on définit son centre de gravité G. Le robot 10 est représenté dans un repère Oxy formé par un plan sagittal du robot 10. L'origine O du repère est placé au centre de l'appui du pied 14 sur le sol 16 L'axe Ox est horizontal et l'axe Oy est vertical. Deux variables géométriques R et θ permettent de définir la position du centre de gravité G dans le repère Oxy. θ représente un angle d'élévation entre d'une part une droite reliant l'origine O et le centre de gravité G et d'autre part l'axe Oy. R représente une distance séparant l'origine O et le centre de gravité G. On utilise la modélisation de pendule inverse dans laquelle toute la masse m du robot 10 est concentrée en son centre de gravité. Cette masse m oscille autour de l'origine O.

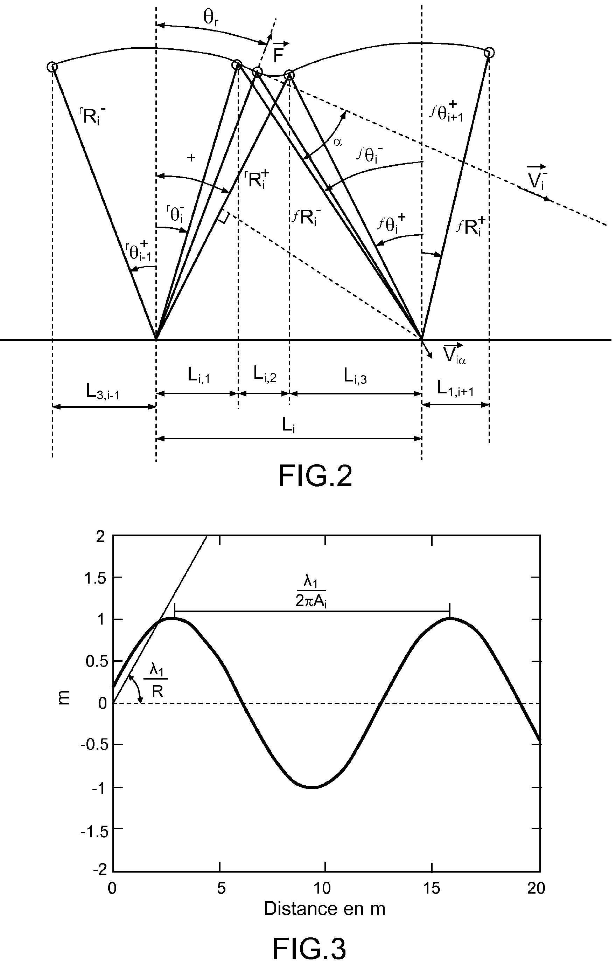

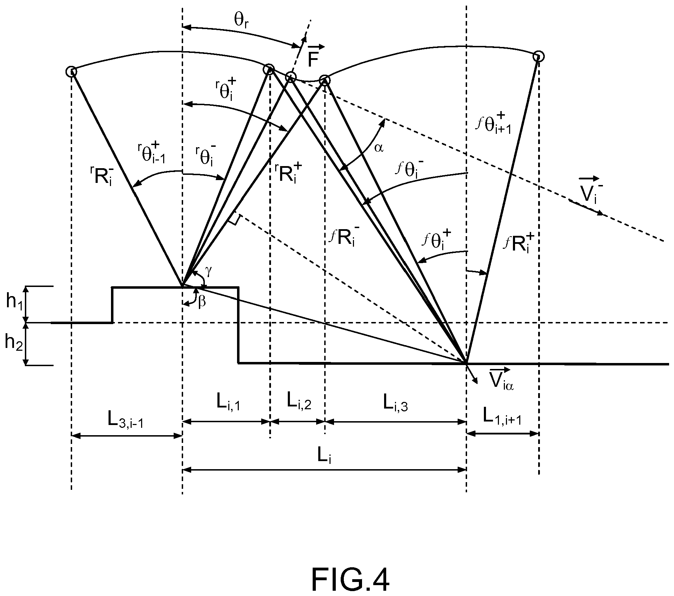

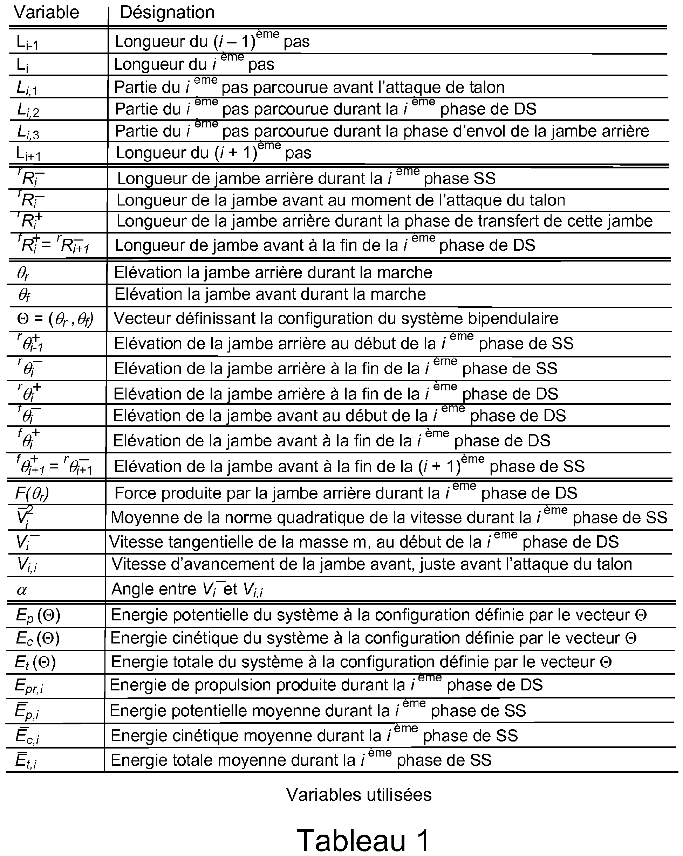

La figure 2 représente l'enchaînement de deux pas sur un sol plan en utilisant le modèle du pendule inverse défini à la figure 1 et la figure 4 représente l'enchainement de deux pas avec franchissement d'un obstacle en utilisant le même modèle. La description des figures 2 et 4 sont reportées en annexe 1 qui permettent d'expliquer un exemple d'équation de conservation de l'énergie totale moyenne durant une enjambée.

L'équation de conservation de l'énergie totale moyenne sur un sol plan est de la forme :

$$\sin\left(\frac{\lambda_1 x + \beta_i}{A_i}\right) = \frac{\lambda_1 x}{R}$$

équation dans laquelle :

- $\lambda_1$ représente une proportion de l'enjambée parcourue où un seul pied est en appui au sol, avant la pose du deuxième pied au sol ;
- x représente la longueur de l'enjambée suivante ;
- $\beta_i$ représente une première fonction de la longueur de l'enjambée courante Li, de la longueur de l'enjambée précédent l'enjambée courante Li-1, d'une force motrice exercée par une jambe durant l'enjambée courante Fi, une vitesse de déplacement moyenne du robot durant l'enjambée courante $\overline{V_i}$ et une vitesse de déplacement moyenne du robot durant l'enjambée suivante $\overline{V_{i+1}}$ ;
- $A_i$ représente une seconde fonction de la longueur de l'enjambée courante Li, de la longueur de l'enjambée précédent l'enjambée courante Li-1, d'une force motrice exercée par une jambe durant l'enjambée courante Fi, une vitesse de déplacement moyenne du robot durant l'enjambée courante $\overline{V_i}$ et une vitesse de déplacement moyenne du robot durant l'enjambée suivante $\overline{V_{i+1}}$ ;
- R représente une distance séparant une zone d'appui au sol et un centre de gravité G du robot 10.

Le tableau 1 définit les différentes variables utilisées en annexe 1. Les différentes variables R avec leurs indices ou exposants sont notés longueur de la jambe. Il s'agit en fait de la distance séparant le centre de gravité G du point d'appui au sol. Il en est de même pour les élévations θ.

**Stratégie de contrôle dans le plan sagittal**

**Hypothèses de travail**

Plusieurs hypothèses ont été proposées pour développer cette stratégie :

1. On est dans le cas du pendule inverse, avec une masse concentrée au centre de gravité du robot.

2. Les jambes du robots sont considérées sans masse.

3. Le contact entre les jambes et le sol est supposé être ponctuel et sans glissemnt.

4. La longeur de jambe est constante durant la phase de simple support.

5. Il y n'a pas de rebond lors du contact entre la jambe et le sol (choc mou).

6. On ne traite pas le cas du premier et du dernier pas.

**Développement de la stratégie**

La figure (2) montre un schéma d'un système muni de deux jambes (désignées jambe arrière et jambe avant) qui sont représentées chacune par un pendule inverse, dans le plan sagittal. Sur cette figure, les différentes phase par lesquelles passe le système sont représentées. On distingue alors, une première phase de simple support (SS) de la jambe avant, une phase de double support où les deux jambes avant et arrière sont en contact avec le sol (DS) et enfin la phase de simple support de la jambe arrière (SS). L'analyse énergétique du système bipendulaire durant la *i*ème enjambée (pas) permettra d'identifier une relation entre les différentes grandeurs et conduira à un résultat original.

Le tableau (1), définit les variables présentées sur la figure (2), et qui seront utilisées par la suite. On désigne par élévation d'un corps l'angle que fait celui-ci avec la verticale.

En appliquant le principe de conservation de l'énergie au système bi-pendulaire dans la configuration définie par les angles $\theta_r$ et $\theta_f$ durant la *i*ème phase de simple support, on peut écrire la relation suivante :

$$E_t(\Theta) = E_p(\Theta) + E_c(\Theta) = C_r^{te} \qquad (1)$$

Comme les jambes sont supposées être sans masse (masse centrée), l'équation (1) peut s'écrire sous la nouvelle forme suivante ne faisant intervenir que l'angle $\theta_r$ de la jambe arrière qui est en contact :

$$E_t(\theta_r) = E_p(\theta_r) + E_c(\theta_r) = C_r^{te} \qquad (2)$$

Cette relation est vraie, quelque soit $\theta_r$. Ceci permet de définir les valeurs moyennes durant la *i*ème phase SS, des trois quantités $Et(\theta_r)$, $E_p(\theta_r)$ et $E_c(\theta_r)$ de la manière suivante :

$$\bar{E}_{t,i} = \frac{1}{\Delta\theta_r} \int_{-r\theta_{i-1}^+}^{r\theta_i^-} E_t(\theta_r)\,d\theta_r,\ \ \bar{E}_{p,i} = \frac{1}{\Delta\theta_r} \int_{-r\theta_{i-1}^+}^{r\theta_i^-} E_p(\theta_r)\,d\theta_r,\ \ \bar{E}_{c,i} = \frac{1}{\Delta\theta_r} \int_{-r\theta_{i-1}^+}^{r\theta_i^-} E_c(\theta_r)\,d\theta_r$$

Donc le principe de conservation d'energie, durant la *i*ème phase de simple support, peut s'étendre aux énergies moyennes définies précédemment sous la forme suivante :

$$\bar{E}_{t,i} = \bar{E}_{p,i} + \bar{E}_{c,i} = C_r^{te} \qquad (3)$$

En effectuant le bilan énergétique du système, entre deux phases de simple supports successives, on peut écrire l'équation suivante :

$$\bar{E}_{t,i+1} = \bar{E}_{t,i} - E_{i,i} + \triangle E_{pr,i} \qquad (4)$$

$\bar{E}_{t,i+1}$ est l'énergie totale moyenne du système bipendulaire durant la $(i + 1)$ème phase de SS. $\Delta E_{pr,i}$ représente l'apport énergétique de la phase propulsive durant la *i*ème phase de DS et $E_{i,i}$ traduit la perte énergétique due à l'impact de la jambe avant au moment de l'attaque du talon (début de la *i*ème phase de DS). Il s'agit maintenant de définir l'ensemble des termes de l'équation (4).

calcul de $\bar{E}_{t,i}$ et $\bar{E}_{t,i+1}$ : Tout d'abord, pour calculer $\bar{E}_{t,i}$ (équation 3), il faut exprimer les énergies potentielles et cinétiques moyennes. Comme $E_p(\theta_r) = mg\,{}^rR_i^- \cos(\theta_r)$, on peut exprimer alors l'énergie potentielle moyenne durant la *i*ème phase de SS sous la forme suivante :

$$\bar{E}_{p,i} = \frac{mg\,^rR_i^-}{\Delta\theta_r} \int_{-^r\theta_{i-1}^+}^{^r\theta_i^-} \cos(\theta_r)\,d\theta_r = mg\,^rR_i^- \left[\frac{\sin(^r\theta_i^-) + \sin(^r\theta_{i-1}^+)}{^r\theta_i^- + {}^r\theta_{i-1}^+}\right] \quad (5)$$

L'énergie cinétique moyenne $\bar{E}_{c,i}$ s'exprime en fonction de la moyenne de la norme quadratique de la vitesse (notée $\bar{V}_i$) sous la forme :

$$\bar{E}_{c,i} = \frac{m}{2}\bar{V}_i^2 \qquad (6)$$

En utilisant les équations (5 et 6), l'expression de l'énergie totale moyenne peut alors être établie sous la forme suivante :

$$\bar{E}_{t,i} = mg\,^rR_i^- \left[\frac{\sin(^r\theta_i^-) + \sin(^r\theta_{i-1}^+)}{^r\theta_i^- + {}^r\theta_{i-1}^+}\right] + \frac{m}{2}\bar{V}_i^2 \qquad (7)$$

Le même développement pour la (i + 1)$^{\text{ème}}$ phase de simple support permet d'aboutir l'expression suivante de $\bar{E}_{p,i+1}$ :

$$\bar{E}_{p,i+1} = mg\,^fR_i^+ \left[\frac{\sin(^f\theta_{i+1}^+) + \sin(^f\theta_i^+)}{^f\theta_{i+1}^+ + {}^f\theta_i^+}\right] \qquad (8)$$

D'où l'expression de l'énergie totale moyenne $\bar{E}_{t,i+1}$ :

$$\bar{E}_{t,i+1} = mg\,^fR_i^+ \left[\frac{\sin(^f\theta_{i+1}^+) + \sin(^f\theta_i^+)}{^f\theta_{i+1}^+ + {}^f\theta_i^+}\right] + \frac{m}{2}\bar{V}_{i+1}^2 \qquad (9)$$

calcul de $E_{i,i}$ : En se basant sur la troisième hypothèse, l'energie absorbée par l'impact est égale à l'energie cinétique suivant la direction de l'impact. Ainsi pour calculer cette perte énergétique due à l'impact de la jambe avant au moment de l'attaque du talon, il faut exprimer la vitesse $V_{i,i}$ de la jambe avant, à cet instant.

$$E_{i,i} = \frac{m}{2}V_{i,i}^2$$

La description géométrique donnée par la figure (1) permet de donner l'expression suivante de cette vitesse d'impact :

$$V_{i,i} = V_i^- \cos(\alpha) \quad \text{avec} \quad \alpha = {}^r\theta_i^- + {}^f\theta_i^- - \frac{\Pi}{2}$$

D'où l'expression finale de $V_{i,i}$ donnée par l'équation suivante :

$$V_{i,i} = V_i^- \sin(^r\theta_i^- + {}^f\theta_i^-) \qquad (10)$$

L'énergie cinétique du système à la configuration définie par $\theta_r = {}^r\theta_i^-$ permet de calculer la vitesse $V_i^-$ en fonction de l'énergie totale moyenne $\bar{E}_{t,i}$ et l'énergie potentielle $E_p(^r\theta_i^-)$. Ceci se traduit par l'équation suivante :

$$E_c(^r\theta_i^-) = \frac{m}{2}(V_i^-)^2 = \bar{E}_{t,i} - E_p(^r\theta_i^-) = \bar{E}_{t,i} - mg\,^rR_i^- \cos(^r\theta_i^-)$$

En utilisant cette dernière expression et celle de la vitesse $V_{i,i}$ (équation 10), la perte énergétique peut s'écrire alors sous la forme définitive suivante :

$$E_{i,i} = \frac{m}{2}(V_{i,i})^2 = \left[\bar{E}_{t,i} - mg\,{}^rR_i^-\cos({}^r\theta_i^-)\right]\sin({}^r\theta_i^- + {}^f\theta_i^-)^2 \qquad (11)$$

**calcul de** $\Delta E_{pr,i}$ : L'apport énergétique de la phase propulsive durant la $i^{ème}$ phase de DS est dû au couple actif autour du point de contact du pied avant. Ce couple désigné par $\tau_i$ est produit par la force $F_i(\theta_r)$ qu'exerce la jambe arrière durant la $i^{ème}$ phase de DS. Il a pour expression :

$$\tau_i(\theta_r) = F_i(\theta_r)\mathbf{L_i}\cos(\theta_r)$$

L'énergie élémentaire de propulsion $dE_{pr,i}$ qu'apporte ce couple peut alors être exprimé sous la forme suivante :

$$dE_{pr,i}(\theta_r) = \tau_i(\theta_r)d\theta_r$$

Dans une première approche, la force $F_i(\theta_r)$ est supposée être constante durant toute la phase de DS et égale à $F_i$. Ainsi, l'énergie élémentaire de propulsion $dE_{pr,i}$ peut s'écrire sous la forme suivante :

$$dE_{ri}(\Theta) = \mathbf{F_i}\mathbf{L_i}\cos(\theta_r)d\theta_r$$

Finalement, $\Delta E_{pr,i}$ est la somme de ces énergies élémentaires de propulsion et aura pour expression :

$$\triangle E_{pr,i} = \mathbf{F_i}\mathbf{L_i}\left[\sin({}^r\theta_i^+) - \sin({}^r\theta_i^-)\right] \qquad (12)$$

Propriétés géométriques : Afin d'obtenir une forme concise et exploitable du bilan énergétique, des propriétés géométriques peuvent être établies. Ces propriétés permettront d'exprimer les différentes longueurs et angles intervenant dans les termes de l'équation (4). En analysant la figure (1), on peut établir les relations suivantes.

1. Dette cette première approche, seul le cas d'un pendule inverse simple est traité, donc ${}^rR_i^- = {}^fR_i^+ = R.$

2. La longueur du pas $L$; est décomposée en une somme de trois portions : $L_{1,i}$, $L_{2,i}$ et $L_{3,i}$. Trois variables, ($\lambda_{1,i}$, $\lambda_{2,i}$ et $\lambda_{3,i}$), traduisent les parties du pas correspondantes aux phases de SS et de DS. Ces coefficients sont définis de la manière suivante :

$$\lambda_{j,i} = \frac{L_{j,i}}{\mathbf{L_i}} \quad \text{pour} \quad j \in \{1,2,3\}$$

On se limite dans cette étude pour le cas simple définit par les mêmes coefficients constants pour tous les pas. Ceci se traduit par cette relation :

$$\lambda_{j,i} = \lambda_j, \forall i$$

3. d'un autre coté, et apartir du figure (2), on peut écrire

$$^rR_i^+ = \sqrt{(L_{1,i} + L_{2,i})^2 + \left({}^fR_i^+\right)^2 - L_{3,i}^2} = \sqrt{(\lambda_1 + \lambda_2)^2\,\mathbf{L_i}^2 + R^2 - \lambda_3^2\,\mathbf{L_i}^2}$$

$$^fR_i^- = \sqrt{(L_{2,i} + L_{3,i})^2 + \left({}^rR_i^-\right)^2 - L_{i1}^2} = \sqrt{(\lambda_2 + \lambda_3)^2\,\mathbf{L_i}^2 + R^2 - \lambda_1^2\,\mathbf{L_i}^2}$$

4. Les relations géométriques permettent d'exprimer les différents angles intervenant dans les termes du bilan énergétique par leurs fonctions sin.

$$\sin({}^{r}\theta_{i}^{-}) = \frac{L_{1,i}}{{}^{r}R_{i}^{-}} = \frac{\lambda_1 \mathbf{L_i}}{R}$$

$$\sin({}^{r}\theta_{i}^{+}) = \frac{L_{1,i} + L_{2,i}}{{}^{r}R_{i}^{+}} = \frac{(\lambda_1 + \lambda_2)\mathbf{L_i}}{\sqrt{(\lambda_1 + \lambda_2)^2 \mathbf{L_i}^2 + R^2 - \lambda_3^2 \mathbf{L_i}^2}}$$

$$\sin({}^{r}\theta_{i-1}^{+}) = \frac{L_{3,i-1}}{{}^{r}R_{i}^{-}} = \frac{\lambda_3 \mathbf{L_{i-1}}}{R}$$

$$\sin({}^{f}\theta_{i}^{+}) = \frac{L_{i,3}}{{}^{f}R_{i}^{+}} = \frac{\lambda_3 \mathbf{L_i}}{R}$$

$$\sin({}^{f}\theta_{i+1}^{+}) = \frac{L_{1,i+1}}{{}^{f}R_{i}^{+}} = \frac{\lambda_1 \mathbf{L_{i+1}}}{R}$$

$$\sin({}^{f}\theta_{i}^{-}) = \frac{L_{i,2} + L_{i,3}}{{}^{f}R_{i}^{-}} = \frac{(\lambda_2 + \lambda_3)\mathbf{L_i}}{\sqrt{(\lambda_2 + \lambda_3)^2 \mathbf{L_i}^2 + R^2 - \lambda_1^2 \mathbf{L_i}^2}}$$

**Relation prédictive liant $L_{i-1}$, $L_i$, $L_{i+1}$, $F_i$, $\overline{V}_i$ et $\overline{V}_{i+1}$** : Afin d'établir la relation prédictive, les relations données par les équations (9, 7,11,12) sont introduites dans le bilan énergétique total du système bi-pendulaire donné par l'équation (4). En regroupant les termes et en divisant l'ensemble par la masse m, nous obtenons la première forme de cette relation prédictive.

$$
\begin{aligned}
{}^{f}R_{i}^{+} \left[ \frac{\sin({}^{f}\theta_{i+1}^{+}) + \sin({}^{f}\theta_{i}^{+})}{{}^{f}\theta_{i+1}^{+} + {}^{f}\theta_{i}^{+}} \right] = \ & -\frac{1}{2g}\overline{V}_{i+1}^2 + \frac{1}{2g}\overline{V}_i^2 \cos({}^{r}\theta_i^{-} + {}^{f}\theta_i^{-})^2 \\
& + {}^{r}R_i^{-} \left[ \frac{\sin({}^{r}\theta_i^{-}) + \sin({}^{r}\theta_{i-1}^{+})}{{}^{r}\theta_i^{-} + {}^{r}\theta_{i-1}^{+}} \right] \cos({}^{r}\theta_i^{-} + {}^{f}\theta_i^{-})^2 \\
& + \frac{F_i \mathbf{L_i}}{mg} \left[ \sin({}^{r}\theta_i^{+}) - \sin({}^{r}\theta_i^{-}) \right] \\
& + {}^{r}R_i^{-} \cos({}^{r}\theta_i^{-}) \sin({}^{r}\theta_i^{-} + {}^{f}\theta_i^{-})^2
\end{aligned}
$$

En analysant l'équation précédente, on trouve que pour une vitesse moyenne désirée au pas suivant $\overline{V}_{i+1}$, tous les éléments composant le terme de la partie droite de l'équation sont connus, durant le $i^{\text{ème}}$ pas actuel. En utilisant les expressions des fonctions sin des différents angles calculées précédemment et en les regroupant dans un même terme $A_i(L_{i-1}, L_i, F_i, \overline{V}_i, \overline{V}_{i+1})$, l'équation globale de conservation d'energie, peut être reformulée de la manière suivante :

$$\frac{\lambda_1 \mathbf{L_{i+1}} + \lambda_3 \mathbf{L_i}}{\arcsin(\frac{\lambda_1 \mathbf{L_{i+1}}}{R}) + \arcsin(\frac{\lambda_3 \mathbf{L_i}}{R})} = A_i(\mathbf{L_{i-1}}, \mathbf{L_i}, \mathbf{F_i}, \bar{\mathbf{V}}_i, \bar{\mathbf{V}}_{i+1}) \qquad (13)$$

La grandeur $A_i$ a pour expression :

$$A_i \;=\; -\frac{1}{2g}\bar{V}_{i+1}^2 + \frac{1}{2g}\bar{V}_i^2 \cos\left(\arcsin(\frac{\lambda_1 L_i}{R}) + \arcsin(\frac{(\lambda_2+\lambda_3)L_i}{\sqrt{(\lambda_2+\lambda_3)^2 L_i^{\,2} + R^2 - \lambda_1^2 L_i^{\,2}}})\right)^2$$

$$+\; \left[\frac{\lambda_1 L_i + \lambda_3 L_{i-1}}{\arcsin(\frac{\lambda_1 L_i}{R}) + \arcsin(\frac{\lambda_3 L_{i-1}}{R})}\right] \cos\left(\arcsin(\frac{\lambda_1 L_i}{R}) + \arcsin(\frac{(\lambda_2+\lambda_3)L_i}{\sqrt{(\lambda_2+\lambda_3)^2 L_i^{\,2} + R^2 - \lambda_1^2 L_i^{\,2}}})\right)^2$$

$$+\; \frac{F_i L_i}{mg}\left[\frac{(\lambda_1+\lambda_2)L_i}{\sqrt{(\lambda_1+\lambda_2)^2 L_i^{\,2} + R^2 - \lambda_3^2 L_i^{\,2}}} - \frac{\lambda_1 L_i}{R})\right]$$

$$+\; R\cos(\arcsin(\frac{\lambda_1 L_i}{R}))\sin\left(\arcsin(\frac{\lambda_1 L_i}{R}) + \arcsin(\frac{(\lambda_2+\lambda_3)L_i}{\sqrt{(\lambda_2+\lambda_3)^2 L_i^{\,2} + R^2 - \lambda_1^2 L_i^{\,2}}})\right)^2$$

L'équation (13) peut être réorganisée sous la forme suivante :.

$$\frac{\lambda_1 L_{i+1} + \lambda_3 L_i}{A_i(L_{i-1}, L_i, F_i, \bar{V}_i, \bar{V}_{i+1})} - \arcsin(\frac{\lambda_3 L_i}{R}) = \arcsin(\frac{\lambda_1 L_{i+1}}{R})$$

Ainsi, nous obtenons la relation prédictive recherchée et qui peut se mettre sous la forme canonique suivante :

$$\sin\left(\frac{\lambda_1 L_{i+1} + \lambda_3 L_i - A_i(L_{i-1}, L_i, F_i, \bar{V}_i, \bar{V}_{i+1})\arcsin(\frac{\lambda_3 L_i}{R})}{A_i(L_{i-1}, L_i, F_i, \bar{V}_i, \bar{V}_{i+1})}\right) = \frac{\lambda_1 L_{i+1}}{R} \tag{14}$$

Dans l'hypothèse que la vitesse moyenne désirée au $(i+1)^{\text{ème}}$ pas soit connue, la seule inconnue dans l'équation 24 est la longueur de pas $L_{i+1}$ car tous les éléments relatifs au $i^{\text{ème}}$ pas sont déjà connus. La résolution d'une équation ayant la forme suivante permet de calculer la longueur du pas à effectuer qui est la solution de l'intersection d'une fonction sinusoïdale et d'une droite dont la pente dépend directement de la proportion de la phase de SS (voir figure 2).

$$\sin(\frac{\lambda_1 x + \beta_i}{A_i}) = \frac{\lambda_1 x}{R} \tag{15}$$

**Stratégie de contrôle dans le plan sagittal avec obstacle**

Le contrôle dit de haut niveau d'un robot bipède est très lié à l'environnement dans lequel la marche a lieu. L'existence des obstacles, est l'une des contraintes les plus fréquentes. Dans cette, la stratégie de contrôle présentée dans le section précédente sera étendue dans le but est de premettre au robot de franchir un obstacle. Les hypothèses de travail formulées précédemment restent toujours valables. On se limitera à donner les nouvelles expressions des énergies définies auparavant. La figure (4) présente un schéma du modèle avec un pendule inverse pour le franchissement d'un obstacle dans le plan sagittal.

L'équation donnant le **bilan énergétique** du système, entre deux phases de simple supports successives, a la même forme que celle donnée par l'équation 16 :

$$\bar{E}_{t,i+1} = \bar{E}_{t,i} - E_{i,i} + \triangle E_{pr,i} \tag{16}$$

Il s'agit de définir les nouvelles expressions des termes de cette équation en tenant compte de la présence de l'obstacle défini sur la figure (4).

calcul de $\bar{E}_{t,i}$ et $\bar{E}_{t,i+1}$ : L'obstacle fera intervenir un terme supplémentaire dans l'expression de l'énergie potentielle moyenne qui sera fonction de la hauteur ($h_1$) de celui-ci durant le $i^{\text{ème}}$ phase de simple support. Ainsi, cette énergie potentielle moyenne aura pour expression :

$$\bar{E}_{p,i} = mg\,{}^rR_i^- \left[\frac{\sin({}^r\theta_i^-) + \sin({}^r\theta_{i-1}^+)}{{}^r\theta_i^- + {}^r\theta_{i-1}^+}\right] + mgh_1 \qquad (17)$$

En utilisant les équations (17 et 6), l'expression de l'énergie totale moyenne peut alors être établie sous la nouvelle forme suivante :

$$\bar{E}_{t,i} = mg\,{}^rR_i^- \left[\frac{\sin({}^r\theta_i^-) + \sin({}^r\theta_{i-1}^+)}{{}^r\theta_i^- + {}^r\theta_{i-1}^+}\right] + mgh_1 + \frac{m}{2}\bar{V}_i^2 \qquad (18)$$

Le même développement pour la $(i+1)^{\text{ème}}$ phase de simple support pour laquelle l'obstacle a une hauteur $(h_2)$, permet d'aboutir l'expression suivante de $\bar{E}_{p,i+1}$ :

$$\bar{E}_{p,i+1} = mg\,{}^fR_i^+ \left[\frac{\sin({}^f\theta_{i+1}^+) + \sin({}^f\theta_i^+)}{{}^f\theta_{i+1}^+ + {}^f\theta_i^+}\right] + mgh_2 \qquad (19)$$

D'où l'expression de l'énergie totale moyenne $\bar{E}_{t,i+1}$ :

$$\bar{E}_{t,i+1} = mg\,{}^fR_i^+ \left[\frac{\sin({}^f\theta_{i+1}^+) + \sin({}^f\theta_i^+)}{{}^f\theta_{i+1}^+ + {}^f\theta_i^+}\right] + mgh_2 + \frac{m}{2}\bar{V}_{i+1}^2 \qquad (20)$$

**calcul de $E_{i,i}$** : En utilisant l'expression établie dans le cas précédent avec la nouvelle forme de l'énergie potentielle et celle de la vitesse $V_{i,i}$ (équation 10), la perte énergétique du à l'impact peut s'écrire alors sous la nouvelle forme suivante :

$$E_{i,i} = = \left[\bar{E}_{t,i} - mg\,{}^rR_i^- \cos({}^r\theta_i^-) - mgh_1\right]\sin({}^r\theta_i^- + {}^f\theta_i^-)^2 \qquad (21)$$

**calcul de $\Delta E_{pr,i}$** : Le couple actif ($\tau_i$) autour du point de contact du pied avant responsable de l'apport énergétique de la phase propulsive durant la $i^{\text{ème}}$ phase de DS doit être recalculé dans le cas de la présence d'un obstacle. Pour ce faire, on définit grâce à la figure (4) les grandeurs suivantes :

- la hauteur totale de l'obstacle $H = h_1 + h_2$
- l'angle $\beta = \arctan(\frac{\mathbf{L_i}}{H})$
- l'angle $\gamma = \Pi - \beta - \theta_r$

$\tau_i$ est produit par la force $F_i(\theta_r)$ qu'exerce la jambe arrière durant la $i^{\text{ème}}$ phase de DS. Cette force est supposée également être constante durant toute la phase de DS et égale à $F_i$ a pour nouvelle expression :

$$\tau_i(\theta_r) = F_i(\theta_r)\sqrt{\mathbf{L_i}^2 + H^2}\sin(\theta_r + \beta)$$

En effectuant le .même raisonnement que précédemment basé sur l'énergie élémentaire de propulsion qu'apporte ce couple, $\Delta E_{pr,i}$ qui est la somme de ces énergies élémentaires de propulsion et aura pour nouvelle expression :

$$\Delta E_{pr,i} = \mathbf{F_i}\sqrt{\mathbf{L_i}^2 + H^2}\left[\cos(\beta - {}^r\theta_i^-) - \cos(\beta - {}^r\theta_i^+)\right] \qquad (22)$$

Relation prédictive liant $L_{i-1}$, $L_i$, $L_{i+1}$, $F_i$, $\bar{V}_i$ et $\bar{V}_{i+1}$ : De la même manière, nous pouvons établir la relation prédictive en utilisant les relations données par les équations (18, 20, 21 et 22) qui sont introduites dans le bilan énergétique total du système bi-pendulaire donné par l'équation (16). La même forme que celle donnée par l'équation (13) peut être alors établie :

$$\frac{\lambda_1 \mathbf{L}_{i+1} + \lambda_3 \mathbf{L}_i}{\arcsin(\frac{\lambda_1 \mathbf{L}_{i+1}}{R}) + \arcsin(\frac{\lambda_3 \mathbf{L}_i}{R})} = B_i(\mathbf{L}_{i-1}, \mathbf{L}_i, \mathbf{F}_i, \bar{\mathbf{V}}_i, \bar{\mathbf{V}}_{i+1}) \qquad (23)$$

$$
\begin{aligned}
B_i ={}& -h_2 - \frac{1}{2g}\bar{V}_{i+1}^2 \\
&+ \left[\left[\frac{\lambda_1 \mathbf{L}_i + \lambda_3 \mathbf{L}_{i-1}}{\arcsin(\frac{\lambda_1 \mathbf{L}_i}{R}) + \arcsin(\frac{\lambda_3 \mathbf{L}_{i-1}}{R})}\right] + h_1 + \frac{m}{2g}\bar{V}_i^2\right] \\
&\times \cos\left(\arcsin(\frac{\lambda_1 \mathbf{L}_i}{R}) + \arcsin(\frac{\lambda_2 \mathbf{L}_i + \lambda_3 \mathbf{L}_i}{\sqrt{(\lambda_2 + \lambda_3)^2 \mathbf{L}_i^2 + (\sqrt{R^2 - \lambda_1^2 \mathbf{L}_i^2} + H)^2}})\right)^2 \\
&+ F_i \sqrt{L_i^2 + H^2}\left[\cos(\beta + \arcsin(\frac{\lambda_1 \mathbf{L}_i}{R})) - \cos(\beta + \arcsin(\frac{\lambda_1 \mathbf{L}_i + \lambda_2 \mathbf{L}_i}{\sqrt{(\lambda_1 + \lambda_2)^2 \mathbf{L}_i^2 + (\sqrt{R^2 - \lambda_3^2 \mathbf{L}_i^2} - H)^2}}))\right] \\
&+ \left[R\cos(\arcsin\left(\frac{\lambda_1 \mathbf{L}_i}{R}\right)) + h_1\right]\sin(\arcsin(\frac{\lambda_1 \mathbf{L}_i}{R}) + \arcsin(\frac{\lambda_2 \mathbf{L}_i + \lambda_3 \mathbf{L}_i}{\sqrt{(\lambda_2 + \lambda_3)^2 \mathbf{L}_i^2 + (\sqrt{R^2 - \lambda_1^2 \mathbf{L}_i^2} + H)^2}}))
\end{aligned}
$$

L'équation (23) peut être réorganisée sous la forme suivante :

$$\frac{\lambda_1 \mathbf{L}_{i+1} + \lambda_3 \mathbf{L}_i}{A_i(\mathbf{L}_{i-1}, \mathbf{L}_i, \mathbf{F}_i, \bar{\mathbf{V}}_i, \bar{\mathbf{V}}_{i+1})} - \arcsin(\frac{\lambda_3 \mathbf{L}_i}{R}) = \arcsin(\frac{\lambda_1 \mathbf{L}_{i+1}}{R})$$

Ainsi, nous obtenons la relation prédictive recherchée et qui peut se mettre sous la forme canonique suivante :

$$\sin\left(\frac{\lambda_1 \mathbf{L}_{i+1} + \lambda_3 \mathbf{L}_i - B_i(\mathbf{L}_{i-1}, \mathbf{L}_i, \mathbf{F}_i, \bar{\mathbf{V}}_i, \bar{\mathbf{V}}_{i+1})\arcsin(\frac{\lambda_3 \mathbf{L}_i}{R})}{B_i(\mathbf{L}_{i-1}, \mathbf{L}_i, \mathbf{F}_i, \bar{\mathbf{V}}_i, \bar{\mathbf{V}}_{i+1})}\right) = \frac{\lambda_1 \mathbf{L}_{i+1}}{R} \qquad (24)$$

Sous certaines hypothèses, cette équation peut se mettre la même forme que celle donnée dans le cas sans obstacle par l'équation (25).

$$\sin(\frac{\lambda_1 x + \delta_i}{B_i}) = \frac{\lambda_1 x}{R} \qquad (25)$$

TAB. 1 - Variables utilisées

| Variable | Désignation |
|---|---|
| $L_{i-1}$ | Longueur du $(i - 1)^{\text{ème}}$ pas |
| $L_i$ | Longueur du $i^{\text{ème}}$ pas |
| $L_{i,1}$ | Partie du $i^{\text{ème}}$ pas parcourue avant l'attaque de talon |
| $L_{i,2}$ | Partie du $i^{\text{ème}}$ pas parcourue durant la $i^{\text{ème}}$ phase de DS |
| $L_{i,3}$ | Partie du $i^{\text{ème}}$ pas parcourue durant la phase d'envol de la jambe arrière |
| $L_{i+1}$ | Longueur du $(i + 1)^{\text{ème}}$ pas |

(suite)

| Variable | Désignation |
|---|---|
| $^{r}R_i^-$ | Longueur de jambe arrière durant la $i^{\text{ème}}$ phase SS |
| $^{f}R_i^-$ | Longueur de la jambe avant au moment de l'attaque du talon |
| $^{r}R_i^+$ | Longueur de la jambe arrière durant la phase de transfert de cette jambe |
| $^{f}R_i^+ = {}^{r}R_{i+1}^-$ | Longueur de la jambe avant à la fin de la $i^{\text{ème}}$ phase de DS |
| $\theta_r$ | Elévation la jambe arrière durant la marche |
| $\theta_f$ | Elévation la jambe avant durant la marche |
| $\Theta = (\theta_r,\ \theta_f)$ | Vecteur définissant la configuration du système bipendulaire |
| $^{r}\theta_{i-1}^+$ | Elévation de la jambe arrière au début de la $i^{\text{ème}}$ phase de SS |
| $^{r}\theta_i^-$ | Elévation de la jambe arrière à la fin de la $i^{\text{ème}}$ phase de SS |
| $^{r}\theta_i^+$ | Elévation de la jambe arrière à la fin de la $i^{\text{ème}}$ phase de DS |
| $^{f}\theta_i^-$ | Elévation de la jambe avant au début de la $i^{\text{ème}}$ phase de DS |
| $^{f}\theta_i^+$ | Elévation de la jambe avant à la fin de la $i^{\text{ème}}$ phase de DS |
| $^{f}\theta_{i+1}^+ = {}^{r}\theta_{i+1}^-$ | Elévation de la jambe avant à la fin de la $(i+1)^{\text{ème}}$ phase de SS |
| $F(\theta_r)$ | Force produite par la jambe arrière durant la $i^{\text{ème}}$ phase de DS |
| $\bar{V}_i^2$ | Moyenne de la norme quadratique de la vitesse durant la $i^{\text{ème}}$ phase de SS |
| $V_i^-$ | Vitesse tangentielle de la masse m, au début de la $i^{\text{ème}}$ phase de DS |
| $V_{i,i}$ | Vitesse d'avancement de la jambe avant, juste avant l'attaque du talon |
| $\alpha$ | Angle entre $V_i^-$ et $V_{i,i}$ |
| $E_p(\Theta)$ | Energie potentielle du système à la configuration définie par le vecteur $\Theta$ |
| $E_c(\Theta)$ | Energie cinétique du système à la configuration définie par le vecteur $\Theta$ |
| $E_t(\Theta)$ | Energie totale du système à la configuration définie par le vecteur $\Theta$ |
| $E_{pr,i}$ | Energie de propulsion produite durant la $i^{\text{ème}}$ phase de DS |
| $\bar{E}_{p,i}$ | Energie potentielle moyenne durant la $i^{\text{ème}}$ phase de SS |
| $\bar{E}_{c,i}$ | Energie cinétique moyenne durant la $i^{\text{ème}}$ phase de SS |
| $\bar{E}_{t,i}$ | Energie totale moyenne durant la $i^{\text{ème}}$ phase de SS |

**Revendications**

1. Procédé de commande d'un robot humanoïde (10) comportant deux jambes (12, 13) terminées chacune par un pied (14, 15) pouvant prendre appui sur un sol (16) et permettant son déplacement, **caractérisé en ce qu'**il consiste à partir d'une équation de conservation de l'énergie totale moyenne durant une enjambée courante à déterminer des paramètres nécessaires à exécuter l'enjambée suivante.

2. Procédé selon la revendication 1, **caractérisé en ce que** les paramètres de l'enjambée comprennent des variables géométriques, une force à exercer par une jambe sur le sol et une vitesse de déplacement moyenne.

**3.** Procédé selon l'une des revendications précédentes, **caractérisé en ce qu'**il consiste à imposer deux paramètres dans un ensemble de paramètres nécessaires à exécuter l'enjambée suivante comprenant des variables géométriques, une force à exercer par une jambe sur le sol et une vitesse de déplacement moyenne pour déterminer le troisième paramètre.

**4.** Procédé selon l'une quelconque des revendications 2 ou 3, **caractérisé en ce que** les variables géométriques de l'enjambée courante comprennent :

• un angle d'élévation entre d'une part une droite reliant une zone d'appui sur le sol d'un pied du robot et le centre de gravité du robot et d'autre part une direction verticale
• et une distance séparant la zone d'appui et le centre de gravité.

**5.** Procédé selon l'une quelconque des revendications 2 à 4, **caractérisé en ce que** les variables géométriques de l'enjambée suivante comprennent une distance séparant une zone d'appui sur le sol d'un pied du robot durant l'enjambée courante et une zone d'appui sur le sol d'un pied du robot durant l'enjambée suivante.

**6.** Procédé selon la revendication 5 **caractérisé en ce que** la distance comprend une distance horizontale et une distance verticale.

**7.** Procédé selon l'une quelconque des revendications 2 à 6, **caractérisé en ce que** les variables géométriques, la force à exercer par une jambe sur le sol et la vitesse de déplacement moyenne s'expriment dans un espace à trois dimensions, de manière à permettre au robot de changer de direction lors de son déplacement.

**8.** Procédé selon l'une des revendications précédentes, **caractérisé en ce que** l'équation de conservation de l'énergie totale moyenne tient compte de l'énergie cinétique du robot, de l'énergie potentielle du robot, de l'énergie perdue lors d'un impact d'un pied du robot et de l'énergie motrice apportée au robot lors d'un appui au sol d'un pied du robot.

**9.** Procédé selon la revendication 8, **caractérisé en ce que** en l'absence de perturbations, la somme de l'énergie cinétique du robot et de l'énergie potentielle du robot est considérée constante tant qu'un seul pied est en contact avec le sol.

**10.** Procédé selon l'une des revendications précédentes, **caractérisé en ce que** la détermination des paramètres nécessaires à exécuter l'enjambée suivante ne se fait qu'une seule fois par enjambée.

**11.** Procédé selon l'une quelconque des revendications 2 à 6, **caractérisé en ce que** l'équation de conservation de l'énergie totale moyenne sur un sol plan est de la forme :

$$\sin\left(\frac{\lambda_1 x + \beta_i}{A_i}\right) = \frac{\lambda_1 x}{R}$$

équation dans laquelle :

• $\lambda_1$ représente une proportion de l'enjambée parcourue où un seul pied est en appui au sol, avant la pose du deuxième pied au sol ;
• x représente la longueur de l'enjambée suivante ;
• $\beta_i$ représente une première fonction de la longueur de l'enjambée courante (Li), de la longueur de l'enjambée précédent l'enjambée courante (Li-1), d'une force motrice exercée par une jambe durant l'enjambée courante (Fi), une vitesse de déplacement moyenne du robot durant l'enjambée courante ($\overline{V_i}$) et une vitesse de déplacement moyenne du robot durant l'enjambée suivante ($\overline{V_{i+1}}$) ;
• $A_i$ représente une seconde fonction de la longueur de l'enjambée courante (Li), de la longueur de l'enjambée précédent l'enjambée courante (Li-1), d'une force motrice exercée par une jambe durant l'enjambée courante (Fi), une vitesse de déplacement moyenne du robot durant l'enjambée courante ($\overline{V_i}$) et une vitesse de déplacement moyenne du robot durant l'enjambée suivante ($\overline{V_{i+1}}$) ;

• R représente une distance séparant une zone d'appui au sol et un centre de gravité (G) du robot (10).

**Patentansprüche**

1. Verfahren zum Steuern eines humanoiden Roboters (10), der zwei Beine (12, 13) aufweist, die jeweils in einem Fuß (14, 15) enden, der auf einem Boden (16) stehen kann und seine Bewegung zulässt, **dadurch gekennzeichnet, dass** es aus einer mittleren Gesamtenergieerhaltungsgleichung während eines aktuellen Schrittes zum Bestimmen der zum Durchführen des nächsten Schrittes notwendigen Parameter besteht.

2. Verfahren nach Anspruch 1, **dadurch gekennzeichnet, dass** die Parameter des Schrittes geometrische Variablen, eine von einem Bein auf den Boden auszuübende Kraft und eine mittlere Bewegungsgeschwindigkeit umfassen.

3. Verfahren nach einem der vorherigen Ansprüche, **dadurch gekennzeichnet, dass** es darin besteht, zwei Parameter in einem Satz von zum Ausführen des nächsten Schrittes notwendigen Parametern aufzuerlegen, umfassend geometrische Variablen, eine von einem Bein auf den Boden auszuübende Kraft und eine mittlere Bewegungsgeschwindigkeit, um den dritten Parameter zu bestimmen.

4. Verfahren nach Anspruch 2 oder 3, **dadurch gekennzeichnet, dass** die geometrischen Variablen des aktuellen Schrittes Folgendes umfassen:

   • einen Elevationswinkel zwischen einerseits einer Geraden, die eine Aufstandszone eines Fußes des Roboters auf dem Boden und dem Schwerpunkt des Roboters verbindet, und andererseits einer vertikalen Richtung
   • und eine Distanz, die die Aufstandszone und den Schwerpunkt trennt.

5. Verfahren nach einem der Ansprüche 2 bis 4, **dadurch gekennzeichnet, dass** die geometrischen Variablen des nächsten Schrittes eine Distanz umfassen, die eine Aufstandszone eines Fußes des Roboters auf dem Boden während des aktuellen Schrittes und eine Aufstandszone eines Fußes des Roboters auf dem Boden während des nächsten Schritt trennt.

6. Verfahren nach Anspruch 5, **dadurch gekennzeichnet, dass** die Distanz eine horizontale Distanz und eine vertikale Distanz umfasst.

7. Verfahren nach einem der Ansprüche 2 bis 6, **dadurch gekennzeichnet, dass** die geometrischen Variablen, die von einem Bein auf den Boden auszuübende Kraft und die mittlere Bewegungsgeschwindigkeit in einem dreidimensionalen Raum ausgedrückt werden, so dass der Roboter die Richtung bei seiner Bewegung ändern kann.

8. Verfahren nach einem der vorherigen Ansprüche, **dadurch gekennzeichnet, dass** die mittlere Gesamtenergieerhaltungsgleichung die kinetische Energie des Roboters, die potentielle Energie des Roboters, die bei einem Auftreten eines Fußes des Roboters verlorene Energie und die auf den Roboter bei einem Aufstehen eines Fußes des Roboters auf dem Boden übertragene motorische Energie berücksichtigt.

9. Verfahren nach Anspruch 8, **dadurch gekennzeichnet, dass** in Abwesenheit von Störungen die Summe der kinetischen Energie des Roboters und der potentiellen Energie des Roboters als konstant angesehen wird, solange ein einziger Fuß mit dem Boden in Kontakt ist.

10. Verfahren nach einem der vorherigen Ansprüche, **dadurch gekennzeichnet, dass** das Bestimmen der zum Ausführen des nächsten Schrittes notwendigen Parameter nur ein einziges Mal pro Schritt durchgeführt wird.

11. Verfahren nach einem der Ansprüche 2 bis 6, **dadurch gekennzeichnet, dass** die mittlere Gesamtenergieerhaltungsgleichung auf einem ebenen Boden die folgende Form hat:

$$\sin\left(\frac{\lambda_1 x + \beta_i}{A_i}\right) = \frac{\lambda_1 x}{R}$$

wobei in der Gleichung:

• $\lambda_1$ einen Anteil des durchgeführten Schrittes repräsentiert, bei dem ein einziger Fuß auf dem Boden steht, vor dem Aufsetzen des zweiten Fußes auf den Boden;

• x die Länge des nächsten Schrittes repräsentiert;

• $\beta_i$ eine erste Funktion der Länge des aktuellen Schrittes (Li), der Länge des dem aktuellen Schritt vorausgehenden Schrittes (Li-1), einer von einem Bein während des aktuellen Schrittes (Fi) ausgeübten motorischen Kraft, einer mittleren Bewegungsgeschwindigkeit des Roboters während des aktuellen Schrittes ($\overline{V_i}$) und einer mittleren Bewegungsgeschwindigkeit des Roboters während des nächsten Schrittes ($\overline{V_{i+1}}$) repräsentiert;

• $A_i$ eine zweite Funktion der Länge des aktuellen Schrittes (Li), der Länge des dem aktuellen Schritt vorausgehenden Schrittes (Li-1), einer von einem Bein während des aktuellen Schrittes (Fi) ausgeübten motorischen Kraft, einer mittleren Bewegungsgeschwindigkeit des Roboters während des aktuellen Schrittes ($\overline{V_i}$) und einer mittleren Bewegungsgeschwindigkeit des Roboters während des nächsten Schrittes ($\overline{V_{i+1}}$) repräsentiert;

• R eine Distanz repräsentiert, die eine Aufstandszone am Boden und einen Schwerpunkt (G) des Roboters (10) trennt.

## Claims

1. Method for controlling a humanoid robot (10) comprising two legs (12, 13) each ending in a foot (14, 15) that can be supported on the floor (16) and that allows for its movement, **characterised in that** it is based on an equation for the conservation of total average energy during a current step to determine parameters necessary to carry out the next step.

2. Method according to claim 1, **characterised in that** the parameters of the step comprise geometric variables, a force to be exerted by a leg on the floor and an average movement speed.

3. Method according to one of the previous claims, **characterised in that** it consists of imposing two parameters in a set of parameters necessary to carry out the next step comprising geometric variables, a force to be exerted by a leg on the floor and an average movement speed to determine the third parameter.

4. Method according to any one of claims 2 or 3, **characterised in that** the geometric variables of the current step comprise:

   • an angle of elevation between on the one hand a line connecting a support zone of a foot of the robot on the floor and the robot's centre of gravity and on the other hand a vertical direction
   • and a distance separating the support zone and the centre of gravity.

5. Method according to any one of claims 2 to 4, **characterised in that** the geometric variables of the next step comprise a distance separating a support zone of a foot of the robot on the floor during the current step and a support zone of a foot of the robot on the floor during the next step.

6. Method according to claim 5 **characterised in that** the distance comprises a horizontal distance and a vertical distance.

7. Method according to any one of claims 2 to 6, **characterised in that** the geometric variables, the force to be exerted by a leg on the floor and the average movement speed are expressed in a three-dimensional space, so as to allow the robot to change direction when it is moving.

8. Method according to one of the previous claims, **characterised in that** the equation for the conservation of total average energy takes into account the kinetic energy of the robot, the potential energy of the robot, the energy lost upon an impact of a foot of the robot and the motive power supplied by the robot when a foot of the robot is supported on the floor.

9. Method according to claim 8, **characterised in that**, in the absence of disruptions, the sum of the kinetic energy of the robot and the potential energy of the robot is considered to be constant so long as a single foot is in contact with the floor.

10. Method according to one of the previous claims, **characterised in that** determining the parameters necessary to carry out the next step is only done once per step.

11. Method according to any one of claims 2 to 6, **characterised in that** the equation for the conservation of total average energy on a flat floor takes the form:

$$\sin\left(\frac{\lambda_1 x + \beta_i}{A_i}\right) = \frac{\lambda_1 x}{R}$$

equation in which:

- $\lambda_1$ represents a proportion of the step travelled where one single foot is supported on the floor, before the second foot is placed on the floor;
- x represents the length of the next step;
- $\beta_i$ represents a first function of the length of the current step (Li), of the length of the step preceding the current step (Li-1), of a motive force exerted by one leg during the current step (Fi), an average movement speed of the robot during the current step $\overline{V_i}$ and an average movement speed of the robot during the next step $(\overline{V_{i+1}})$;
- A$_i$ represents a second function of the length of the current step (Li), of the length of the step preceding the current step (Li-1), of a motive force exerted by one leg during the current step (Fi), an average movement speed of the robot during the current step ($\overline{V_i}$) and an average movement speed of the robot during the next step $(\overline{V_{i+1}})$;
- R represents a distance separating a support zone on the floor and a centre of gravity (G) of the robot (10).

FIG.1

FIG.2

FIG.3

FIG.4

| Variable | Désignation |
|---|---|
| $L_{i-1}$ | Longueur du $(i-1)^{\text{ème}}$ pas |
| $L_i$ | Longueur du $i^{\text{ème}}$ pas |
| $L_{i,1}$ | Partie du $i^{\text{ème}}$ pas parcourue avant l'attaque de talon |
| $L_{i,2}$ | Partie du $i^{\text{ème}}$ pas parcourue durant la $i^{\text{ème}}$ phase de DS |
| $L_{i,3}$ | Partie du $i^{\text{ème}}$ pas parcourue durant la phase d'envol de la jambe arrière |
| $L_{i+1}$ | Longueur du $(i+1)^{\text{ème}}$ pas |
| $^{r}R_i^{-}$ | Longueur de jambe arrière durant la $i^{\text{ème}}$ phase SS |
| $^{f}R_i^{-}$ | Longueur de la jambe avant au moment de l'attaque du talon |
| $^{r}R_i^{+}$ | Longueur de la jambe arrière durant la phase de transfert de cette jambe |
| $^{f}R_i^{+} = {}^{r}R_{i+1}^{-}$ | Longueur de jambe avant à la fin de la $i^{\text{ème}}$ phase de DS |
| $\theta_r$ | Elévation la jambe arrière durant la marche |
| $\theta_f$ | Elévation la jambe avant durant la marche |
| $\Theta = (\theta_r, \theta_f)$ | Vecteur définissant la configuration du système bipendulaire |
| $^{r}\theta_{i-1}^{+}$ | Elévation de la jambe arrière au début de la $i^{\text{ème}}$ phase de SS |
| $^{r}\theta_i^{-}$ | Elévation de la jambe arrière à la fin de la $i^{\text{ème}}$ phase de SS |
| $^{r}\theta_i^{+}$ | Elévation de la jambe arrière à la fin de la $i^{\text{ème}}$ phase de DS |
| $^{f}\theta_i^{-}$ | Elévation de la jambe avant au début de la $i^{\text{ème}}$ phase de DS |
| $^{f}\theta_i^{+}$ | Elévation de la jambe avant à la fin de la $i^{\text{ème}}$ phase de DS |
| $^{f}\theta_{i+1}^{+} = {}^{r}\theta_{i+1}^{-}$ | Elévation de la jambe avant à la fin de la $(i+1)^{\text{ème}}$ phase de SS |
| $F(\theta_r)$ | Force produite par la jambe arrière durant la $i^{\text{ème}}$ phase de DS |
| $\overline{V}_i^2$ | Moyenne de la norme quadratique de la vitesse durant la $i^{\text{ème}}$ phase de SS |
| $V_i^{-}$ | Vitesse tangentielle de la masse m, au début de la $i^{\text{ème}}$ phase de DS |
| $V_{i,i}$ | Vitesse d'avancement de la jambe avant, juste avant l'attaque du talon |
| $\alpha$ | Angle entre $V_i^{-}$ et $V_{i,i}$ |
| $E_p(\Theta)$ | Energie potentielle du système à la configuration définie par le vecteur $\Theta$ |
| $E_c(\Theta)$ | Energie cinétique du système à la configuration définie par le vecteur $\Theta$ |
| $E_t(\Theta)$ | Energie totale du système à la configuration définie par le vecteur $\Theta$ |
| $E_{pr,i}$ | Energie de propulsion produite durant la $i^{\text{ème}}$ phase de DS |
| $\overline{E}_{p,i}$ | Energie potentielle moyenne durant la $i^{\text{ème}}$ phase de SS |
| $\overline{E}_{c,i}$ | Energie cinétique moyenne durant la $i^{\text{ème}}$ phase de SS |
| $\overline{E}_{t,i}$ | Energie totale moyenne durant la $i^{\text{ème}}$ phase de SS |

Variables utilisées

# Tableau 1

**RÉFÉRENCES CITÉES DANS LA DESCRIPTION**

**Littérature non-brevet citée dans la description**

- Dynamic Walking Control of a Biped Robot Along a Potential Energy Conserving Orbit. *l'IEEE, l'énergie potentielle est maintenue constante,* 04 Août 1992